# EUROPEAN PATENT APPLICATION

(11) **EP 2 950 265 A1**
(43) Date of publication of application: **02.12.2015**
(21) Application number: 15167347.2
(22) Date of filing: 12.05.2015
(51) Int. Cl.: G06Q 50/30

(54) **DETECTING IMPORTANT TRANSIT STOPS FOR TRANSIT TRIP GROUPING**

(30) Priority: 30.05.2014 US 201462005256 P; 27.04.2015 US 201514696527
(71) Applicant: Google Inc., Mountain View, CA 94043 (US)
(72) Inventor: Flier, Holger-Frederik Robert, 8002 Zurich (CH); Graells, Albert, 8002 Zurich (CH)
(74) Representative: Grant, David Michael

(57) **Abstract**

Systems and methods for identifying a direction name associated a transit trip along a transit line for use in, for instance, grouping departure times or arrival times associated with transit trips at a transit stop are provided. Data indicative or an ordering ranking the plurality of transit stops in terms of importance can be accessed. Important transit stops between the reference transit stop and an ending transit stop associated with a transit trip can be identified using the ordering of the plurality of transit stops. The station names associated with the identified important transit stops can be used as a basis for the direction name associated with the transit trip at the particular reference transit stop. Departure times can be grouped by the identified direction names and using other parameters, such as by headsign.

## Description

### PRIORITY CLAIM

The present applications claims the benefit of priority of U.S. Provisional Patent Application No. 62/005,256 filed on May 30, 2014 and titled "Detecting Important Stations for Transit Trip Grouping."

### FIELD

The present disclosure relates generally to providing information for public transportation planning to a user.

### BACKGROUND

Many services exist for planning a route using a transit system. Transit planning services can be implemented, for instance, as part of a navigation application, mapping application, or other application. Transit planning services can provide information, such as published schedules of train, bus and other public transportation departure and arrival times for individual stations or stops. A user can browse through information provided by the transit planning system to assist in planning a journey using public transportation. In some cases, a user can input a departure and/or arrival time as well as origin and destination locations to the transit planning service. Search algorithms can be used to identify possible transit trips between the origin and the destination across one or more modes of transportation, such as ferries, buses, rails, walking, etc.

### SUMMARY

Aspects and advantages of embodiments of the present disclosure will be set forth in part in the following description, or may be learned from the description, or may be learned through practice of the embodiments.

One example aspect of the present disclosure is directed to a computer-implemented method of determining a direction name associated with a transit line at a reference transit stop. The method includes identifying, by one or more computing devices, a plurality of transit stops along a transit line and accessing, by the one or more computing devices, data indicative of an ordering for the plurality of transit stops along the transit line. The ordering can rank each of the plurality of transit stops based at least in part on a frequency of use of the transit stop in a transit network. The method further includes determining, by the one or more computing devices, a direction name associated with a transit trip along the transit line at a reference transit stop based at least in part on the data indicative of the ordering for the plurality of transit stops. The method can further include providing for display, by the one or more computing devices, the direction name in conjunction with a transit time associated with the transit trip at the reference transit stop.

Other example aspects of the present disclosure are directed to systems, apparatus, tangible, non-transitory computer-readable media, user interfaces, memory devices, and electronic devices for determining direction names associated with transit trips.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an example user interface associated with a transit planning service grouping departure times for a transit stop;
FIG. 2 depicts an example user interface associated with a transit planning service grouping departure times for a transit stop according to example aspects of the present disclosure;
FIG. 3 depicts a flow diagram of an example method according to example aspects of the present disclosure;
FIGS. 4-6 depict the example determination of a direction name associated with one or more transit trips at various transit stops according to example aspects of the present disclosure; and
FIG. 7 depicts an example computing system according to example aspects of the present disclosure.

### DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope or spirit of the present disclosure. For instance, features illustrated or described as part of one embodiment can be used with another embodiment to yield a still further embodiment. Thus, it is intended that aspects of the present disclosure cover such modifications and variations.

### Overview

Generally, example aspects of the present disclosure are directed to identifying, using one or more computing devices, a direction name associated a transit trip along a transit line for use in, for instance, grouping departure times or arrival times associated with transit trips at a transit stop. As used herein, a transit line refers to a particular line of a public transit system, such as a rail system, subway system, bus system, ferry system, or other public transit system. A transit line can be associated with one or more transit stops. A transit stop can refer to a station or stop where one or more transit lines or other modes of transportation arrive and/or depart. A transit trip can refer to an instance of travel over one or more transit lines. A transit trip can be associated with one or more transit times, such as a departure time and/or an arrival time. A transit trip can also be associated with a headsign. The headsign associated with the transit trip can refer to a transit stop that serves as a destination of the transit trip.

Transit planning services can provide information, such as published schedules of train, bus and other public transportation departure times and arrival times for individual stations or stops. For instance, a transit planning service can provide information such as a list of departures for transit trips at a transit stop. The list of departures can be grouped first by transit line and then by headsign.

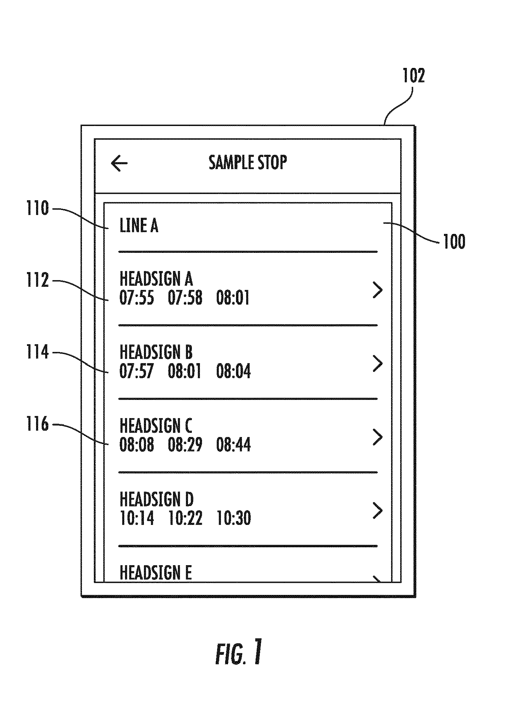

FIG. 1 depicts an example user interface 100 provided for display on a computing device 102 (e.g. smartphone, tablet, navigation system, display with one or more processors, wearable computing device, etc.). The user interface 100 can be presented, for instance, by a transit planning service. As shown, the user interface 100 presents a plurality of departure times associated with available transit trips at a transit stop, in this example "Sample Stop." The plurality of departure times are grouped first by transit line 110, in this example the "Line A" transit line. The departure times are then grouped by headsign. For instance, a first group of departure times 112 is grouped under the headsign "Headsign A." A second group of departure times 114 is grouped under the headsign "Headsign B." A third group of departure times 116 is grouped under the headsign "Headsign C," and so forth.

For some transit stops and transit lines, there can be many headsigns associated with the different transit trips on the transit line. Despite the many headsigns, a transit trip can typically only travel in two directions along the transit line. For example, a transit trip along a subway transit line can travel in a first direction or in a second direction. According to example aspects of the present disclosure, transit times (e.g. departure times or arrival times) associated with transit trips can be grouped by direction of the transit trip along the transit line to simplify and enhance the presentation of information to the user.

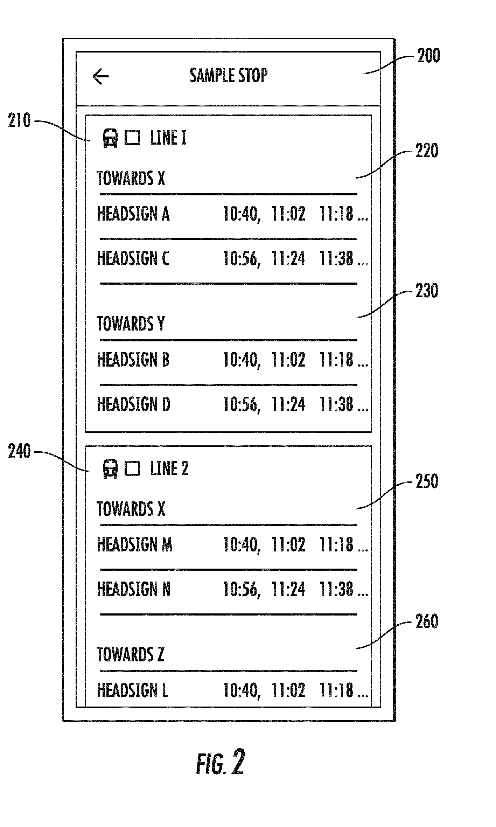

For instance, FIG. 2 depicts an example user interface 200 provided for display on a computing device that can be presented by a transit planning service according to example aspects of the present disclosure. As shown, the user interface 200 presents a plurality of departure times associated with various transit trips available for departure from a transit stop, in this example "Sample Stop." The user interface 200 presents the departure times grouped first by transit line 210 and 240. The departure times are then grouped by direction. For instance, departure times associated with transit line 210 can be grouped by direction 220 "Towards X" and by direction 230 "Towards Y." Departure times associated with transit line 240 can be grouped by direction 250 "Towards X" and direction 260 "Towards Z." The departure times can then grouped by headsign as further illustrated in FIG. 2.

Direction names associated with transit trips can be stated in terms of important or busy transit stops/destinations on the transit line (e.g. via "Station 1", toward "Station 2, etc."). This information may not be available from typical public transportation data sources, such as data sources accessed by a transit planning service. Example aspects of the present disclosure are directed to automatically identifying important transit stops to serve as a basis for direction names for a transit trip. The direction names can be used, for instance, for grouping transit times associated with transit trips at a reference transit stop. The reference transit stop will serve as the transit stop from which transit line directions will be determined and/or for which departure times are grouped.

More particularly, a plurality of transit stops along a transit line associated with the reference transit stop can be identified. Data indicative or an ordering (e.g. a weak ordering) ranking the plurality of transit stops in terms of importance (e.g. measured by frequency of use or other suitable criteria) can be accessed. Important transit stops between the reference transit stop and an ending transit stop associated with a transit trip can be identified using the ordering of the plurality of transit stops. The station names associated with the identified important transit stops can be used as a basis for the direction name associated with the transit trip at the particular reference stop.

For example, a user can request a list of departure times for transit trips associated with a particular transit stop (i.e. the reference transit stop) from a transit planning service implemented using one or more computing devices. The transit planning service can group the departure times by transit line. Direction names associated with the transit trips can be determined by identifying important transit stop names using an ordering of transit stops along the transit line according to example aspects of the present disclosure. The transit planning service can then group the departure times by the identified direction names and using other parameters, such as by headsign. The grouped departures times can then be presented to the user in a suitable user interface presented on a display device.

According to particular aspects of the present disclosure, the ordering of the plurality of transit stops along a transit line can be a weak ordering ranking transit stops based at least in part on data indicative of the frequency of use of the transit stops. For instance, the weak ordering can be based at least in part on the number of departures and/or arrivals at each of the plurality of transit stops, based at least on the number of transfers at each of the plurality of transit stops, and/or based at least in part on a number of passengers using the transit stop.

In particular example implementations, the ordering can be accessed and used to identify a station name by identifying a highest ranked transit stop in the ordering that is located downstream of the reference transit stop for the transit trip. The station name of the highest ranked transit stop can serve as a basis the direction name.

In some example implementations, a transit line can be associated with a plurality of different transit trips that travel to different transit stops. For instance, transit trips associated with same transit line may fork into different directions to different ending transit stops. In this example, a highest ranked transit stop common to the plurality of transit trips can be identified using the ordering. The station name associated with the highest ranked transit stop that is common to the plurality of transit trips can serve as a basis for the direction name for a transit trip at a reference transit stop.

### Flow Diagram of Example Method for Determining a Direction Name for a Transit Trip at a Reference Transit Stop

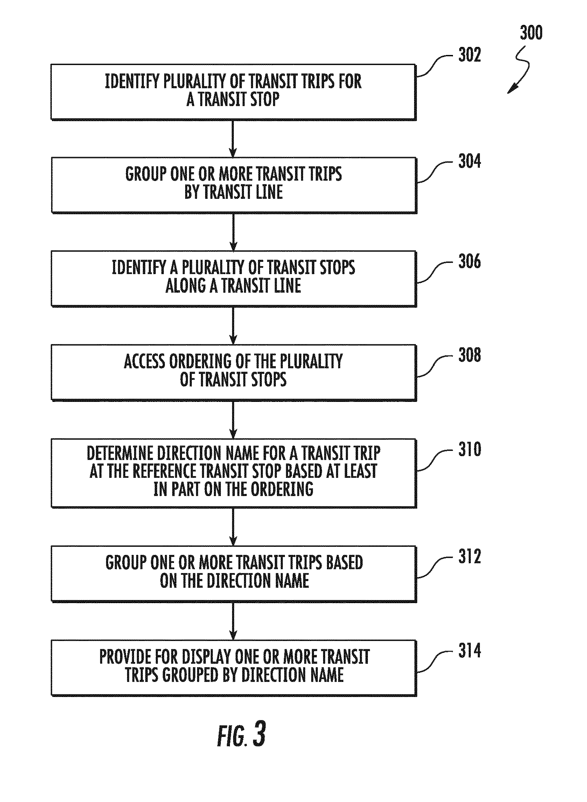

FIG. 3 depicts a flow diagram of an example method (300) for determining a direction name for a transit trip at a reference transit stop according to example aspects of the present disclosure. FIG. 3 depicts steps performed in a particular order for purposes of illustration and discussion. Those of ordinary skill in the art, using the disclosures provided herein, will understand that various steps of any of the methods disclosed herein can be adapted, rearranged, omitted, expanded, and/or modified in various ways without deviating from the scope of the present disclosure.

At (302), the method includes identifying a plurality of transit trips for a reference transit stop. The reference transit stop can be the transit stop for which direction names for transit trips are determined and/or for which transit times associated with transit trips are grouped. For instance, in one example embodiment, a user can request information associated with particular transit trips departing from a particular transit stop from a transit planning service. The particular transit stop that is the subject of the request can be identified as the reference transit stop. Each of the plurality of transit trips can be associated with a transit time (e.g. a departure time or an arrival time) and a headsign. The headsign can be the name of a transit stop associated with the transit trip, such as a destination associated with the transit trip.

At (304), the method includes grouping the plurality of transit trips by at least one transit line associated with the reference transit stop. The at least one transit line can be identified from public transportation network data. For instance, data indicative of transit schedules, transit maps, and other data can be accessed to identify at least one transit line that departs from and/or arrives at the reference transit stop.

At (306), the method includes identifying a plurality of transit stops along the at least one transit line. The plurality of transit stops can be identified from data indicative of transit schedules, transit maps, and other data accessible by a transit planning service. The plurality of transit stops can include all of the transit stops visited by a particular transit line across one or more transit trips.

At (308), the method includes accessing an ordering of the plurality of transit stops. The ordering of the plurality of transit stops ranks the transit stops based at least in part on data indicative of frequency of use of the transit stops in a transit network. For instance, the ordering can be a weak ordering, such as "Ordering I" (denoted as <= _I (a,b)) that corresponds to importance classes of transit stops such that *a* <= _I *b* indicates that the importance of *a* is less than or equal to the importance of *b.* In a simplified example, the top ranked transit stops according to the ordering can be a main transit stop (e.g. a hub) or a transit stop associated with the airport. Transit stops associated with the second rank can be major transit stops with many transit lines and transfers. An example of a lower ranked transit stop can be a transit stop that is only served by a single transit line.

In one example implementation, the ordering is based on a component wise less than or equal to comparison having various components, including a passenger score, a departure score, and a transfer score. The passenger score can be based at least in part on an estimated number of passengers using the transit stop over a given time period. The departure score can be based at least in part on the number of departures at the transit stop over a period of time, such as a calendar week. The transfer score can be based at least in part on the number of transfers that are possible at a transit stop. For instance, assuming a random arrival, the number of transfers can be equal to the number of possible transfers within a period of time (e.g. 30 minutes) with distinct headsigns. Other suitable factors can be used to determine the ordering without deviating from the scope of the present disclosure. For instance, an arrival score can be used that is based at least in part on the number of arrivals at the transit stop over a period of time.

Each of the scores or other components used in determining the ordering can undergo some form of clustering so that for each component, there are a limited number of equivalent classes. For example, if there are 541 departures at one transit stop and 550 departures at another, then both transit stops can have equivalent departures scores. The data used to generate the ordering can be accessed, for instance, from public transportation data and public statistics regarding passenger use.

At (310), the method includes determining a direction name for a transit trip at the reference transit stop based at least in part on the ordering. More particularly, a direction name can be determined based at least in part on a station name associated with a transit stop identified based at least in part on the ordering of the plurality of transit stops. For example, the direction name can be "via Station A" where transit stop "Station A" is identified based at least in part on the ordering of transit stops according to example aspects of the present disclosure. As another example, the direction name can be "towards Station B" where transit stop "Station B" is identified based at least in part on the ordering of transit stops according to example aspects of the present disclosure.

In one particular implementation, the direction name for a transit trip is determined by identifying a highest ranked transit stop in the ordering that is downstream of the reference transit stop in the transit trip. The station name associated with the highest ranked transit stop can serve as the basis for the direction name.

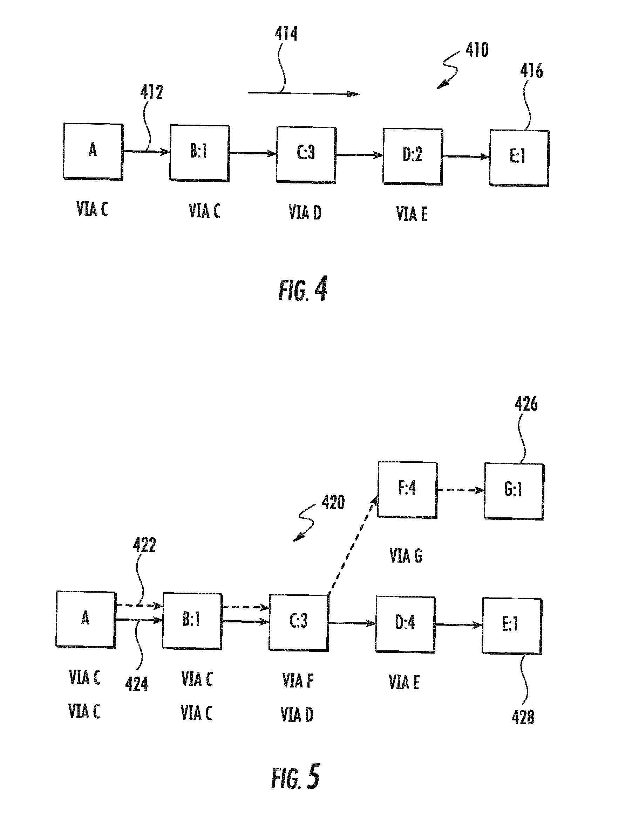

For example, FIG. 4 depicts a representation of an example transit line 410 having a transit trip 412 traveling in direction 414 and visiting transit stops A, B, C, D, and E. Transit stop E serves as an ending transit stop 416 for the transit trip 412 because it is the last transit stop associated with the transit trip 412. The transit stops A, B, C, D, and E are associated with different rankings in an ordering of the transit stops. For instance, transit stop B is associated with a ranking of "1" in the ordering. Transit stop C is associated with a ranking of "3" in the ordering. Transit stop D is associated with a ranking of "2" in the ordering. Transit stop E is associated with a ranking of "1" in the ordering. Because the ordering is a weak ordering, some transit stops may share the same ranking.

The direction name for the transit trip 412 at reference transit stop A can be identified as "via C" because transit stop C is the highest ranked transit stop visited by trip 412 downstream of reference transit stop A. The direction name for the transit trip 412 at reference transit stop B can also be identified as "via C" because transit stop C remains the highest ranked transit stop visited by transit trip 412 downstream of reference transit stop B. The direction name for the transit trip 412 at reference transit stop C can be identified as "via D" because transit stop D is the highest ranked transit stop visited by transit trip 412 downstream of reference transit stop B. The direction name for the transit trip 412 at reference transit stop D can be "via E" because transit stop E is the only remaining transit visited by trip 412 downstream of reference transit stop D.

One example algorithm for automatically determining direction names for transit trips in this manner is as follows. The direction name that is associated with a transit trip along transit line 1 at a transit stop s is called stop_direction_name (I,s).
1. Compute ordering <= _I(a,b)
2. For each transit trip of each transit line 1:
   a. Let s_1, s_2, ..., s_n be transit stops along the transit trip.
   b. Set x = s_n, the ending transit stop along the transit trip.
   c. for i = n-1 to 1:
      i. Set stop_direction_name(I, s_i) = "via" + s_x
      ii. If x <= _I s_i, then set x = s_i.
Note that for the last stop s_n, a stop_direction_name is not computed because there is no further departure along the trip and hence no direction.

In some example implementations, transit trips associated with the same transit line can visit different transit stops. More particularly, a transit line can be associated with a first transit trip and a second transit trip with the first transit trip visiting at least one transit stop along the transit line that is different from the second transit trip. For instance, different transit trips may fork along the transit line or one transit trip may be a subsequence of another transit trip along the transit line. In this example, it can be desirable to exclude certain transit stops in the identification of a station name for a transit stop to serve as a basis for the direction name associated with a transit trip. To achieve this, the direction name can be determined by identifying a highest ranked transit stop that is common to both the first transit trip and the second transit trip and that is downstream of the reference transit stop in the first transit trip and the second transit trip. The station name associated with the highest ranked transit stop that is common to both the first transit trip and the second transit trip can be identified as the direction name for a particular transit trip.

For example, FIG. 5 depicts a representation of an example transit line 420 having a first transit trip 422 visiting transit stops A, B, C, F, and G and a second transit trip 424 visiting transit stops A, B, C, D, and E. Transit stop G serves as an ending transit stop 426 for the first transit trip 422. Transit stop E serves as an ending transit stop 428 for the second transit trip 424. The transit stops A, B, C, D, E, F, and G are associated with different rankings in an ordering of the transit stops. For instance, transit stop B is associated with a ranking of "1" in the ordering. Transit stop C is associated with a ranking of "3" in the ordering. Transit stop D is associated with a ranking of "4" in the ordering. Transit stop E is associated with a ranking of "1" in the ordering. Transit stop F is associated with a ranking of "4" in the ordering. Transit stop G is associated with a ranking of "1" in the ordering.

The direction name for the first transit trip 422 at reference transit stop A can be identified as "via C" because transit stop C is the highest ranked transit stop that is common to both the first transit trip 422 and the second transit trip 424 and that is that is downstream of the reference transit stop in the first transit trip 422. Similarly, the direction name for the second transit trip 424 at reference transit stop A is "via C" because transit stop C is the highest ranked transit stop that is common to both the first transit trip 422 and the second transit trip 424 and that is downstream of the reference transit stop in the second transit trip 424.

The direction name for the first transit trip 422 at reference transit stop B can also be identified as "via C" because transit stop C remains the highest ranked transit stop that is common to the first transit trip 422 and the second transit trip 424 and that is downstream of the reference transit stop in the first transit trip 424. Similarly, the direction name for the second transit trip 424 at reference transit stop B is "via C" because transit stop C is the highest ranked transit stop that is common to both the first transit trip 422 and the second transit trip 424 and that is downstream of the reference transit stop in the second transit trip 424.

The direction name for the first transit trip 422 at reference transit stop C can be identified as "via F" because there are no more common transit stops between the first transit trip 422 and the second transit trip 424 and transit stop F is the highest ranked transit stop located downstream of the reference transit stop in the first transit trip 422. Similarly, the direction name for the second transit trip 424 at reference transit stop C can be identified as "via D" because there are no more common transit stops between the first transit trip 422 and the second transit trip 424 and transit stop D is the highest ranked transit stop and that is downstream of the reference transit stop in the second transit trip 424.

The direction name for the first transit trip 422 at reference transit stop F can be "via G" because transit stop G is the only remaining transit stop associated with first transit trip 422. The direction name for the second transit trip 424 at reference stop D can be "via E" because transit stop E is the only remaining transit stop associated with the second transit trip 424.

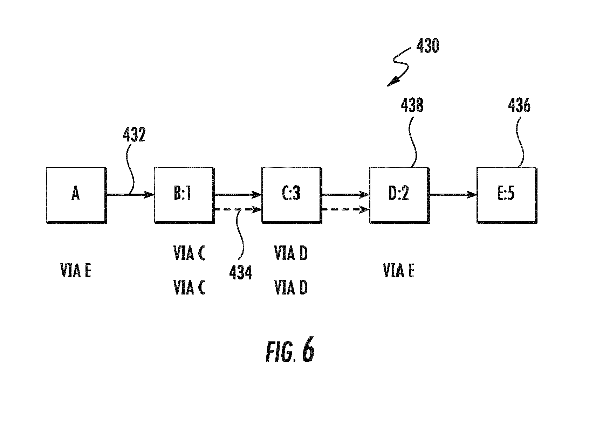

FIG. 6 depicts another example transit line 430 having a first transit trip 432 and a second transit trip 434. The first transit trip 432 visits transit stops A, B, C, D and E. The second transit trip 434 visits a sub-sequence of transit stops, namely transit stops B, C, and D. Transit stop E serves as an ending transit stop 436 for the first transit trip 432. Transit stop D serves as an ending transit stop 438 for the second transit trip 424. The transit stops A, B, C, D, and E are associated with different rankings in an ordering of the transit stops. For instance, transit stop B is associated with a ranking of "1" in the ordering. Transit stop C is associated with a ranking of "3" in the ordering. Transit stop D is associated with a ranking of "2" in the ordering. Transit stop E is associated with a ranking of "5" in the ordering.

The direction name for the first transit trip 432 at reference transit stop A can be identified as "via E" because transit stop E is the highest ranked transit stop visited by the first transit trip 432. The direction name for the first transit trip 432 at reference stop B can be identified as "via C" because transit stop C is the highest ranked transit stop that is common to both the first transit trip 432 and the second transit trip 434 and that is downstream of the reference transit stop in the first transit trip 432. Similarly, the direction name for the second transit trip 434 at reference transit stop B is "via C" because transit stop C is the highest ranked transit stop that is common to both the first transit trip 432 and the second transit trip 434 and that is downstream of the reference transit stop in the second transit trip 434.

The direction name for the first transit trip 432 at reference stop C can be identified as "via D" because transit stop D is the highest ranked transit stop that is common to both the first transit trip 432 and the second transit trip 434 and that is downstream of the reference transit stop in the first transit trip 434. Similarly, the direction name for the second transit trip 434 at reference transit stop C is "via D" because transit stop D is the highest ranked transit stop that is common to both the first transit trip 432 and the second transit trip 434 and located and that is downstream of the reference transit stop in the second transit trip 434. The direction name for the first transit trip 432 at reference transit stop D can be "via E" because transit stop E is the only remaining transit stop associated with first transit trip 432.

One example algorithm for determining direction names for transit trips in this manner is as follows:
1. Compute ordering <= _I(a,b)
2. Compute sets of transit stops S(I, a, b) := {x: x is a transit stop in the intersection of tails T (t,b) of trips t of line 1 that use the leg (a,b), where T(t,b) is the set of transit stops along trip t starting transit stop b}
3. For each transit trip of each transit line 1:
   a. Let s_1, s_2, ..., s_n be transit stops along the transit trip.
   b. Set x = s_n, the ending transit stop along the transit trip.
   c. for i = n-1 to 1:
      i. Set stop_direction_name(I, s_i) = "via" + s_x
      ii. best = max (S(I, s_{i-1}, s_i)) // best is the highest ranked transit stop at or after s_i that is common to all trips of line 1 that go along leg (s_{i-1}, s_i).
      iii. If x <= _I best, then set x = best.

At (312), the method can include grouping one or more transit trips based on the direction name. For instance, the method can include grouping transit trips by transit line, direction, and headsign. At (314), the one or more transit trips grouped by direction name are provided for display on a display device. For instance, the one or more transit trips grouped by direction name can be presented in a user interface of a transit planning service, such as in the manner shown in user interface 200 of FIG. 2. Providing for display can refer to actually displaying the one or more transit trips grouped by direction name or providing information for the display of the one or more transit trips grouped by direction name to, for instance, a remote computing device or display device.

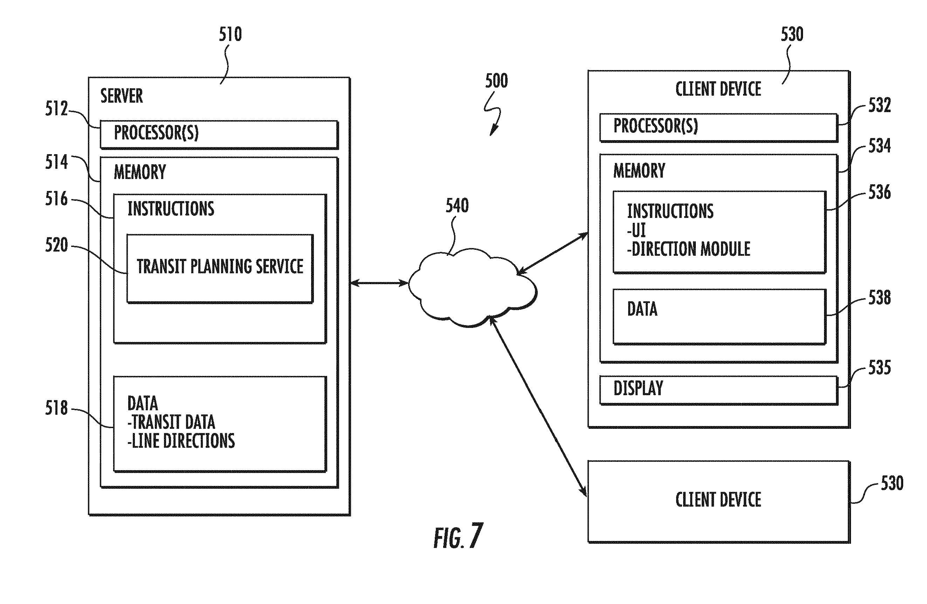

The method (300) can be implemented by one or more computing devices, such as one or more of the computing devices depicted in FIG. 7. For instance, in one example embodiment, all of the steps of method (300) can be implemented on a single computing device. In another example embodiment, steps (302) to (310) can be periodically performed (e.g. once a week) at a first computing device, such as a web server hosting a transit planning service. Steps (312) to (314) can be performed, for instance, by a second computing device, such as a client device accessing the transit planning service hosted by the web server.

### Example Computing System for Determining Direction for a Transit Trip at a Reference Transit Stop

FIG. 7 depicts a computing system 500 that can be used to implement the methods and systems according to example aspects of the present disclosure. The system 500 can be implemented using a client-server architecture that includes a server 510 that communicates with one or more client devices 530 over a network 540. The system 500 can be implemented using other suitable architectures, such as a single computing device.

The system 500 includes a server 510, such as a web server. The server 510 can host a transit planning service. The server 510 can be implemented using any suitable computing device(s). The server 510 can have one or more processors 512 and memory 514. The server 510 can also include a network interface used to communicate with one or more client devices 530 over the network 540. The network interface can include any suitable components for interfacing with one more networks, including for example, transmitters, receivers, ports, controllers, antennas, or other suitable components.

The one or more processors 512 can include any suitable processing device, such as a microprocessor, microcontroller, integrated circuit, logic device, or other suitable processing device. The memory 514 can include one or more computer-readable media, including, but not limited to, non-transitory computer-readable media, RAM, ROM, hard drives, flash drives, or other memory devices. The memory 514 can store information accessible by the one or more processors 512, including computer-readable instructions 516 that can be executed by the one or more processors 512. The instructions 516 can be any set of instructions that when executed by the one or more processors 512, cause the one or more processors 512 to perform operations. For instance, the instructions 516 can be executed by the one or more processors 512 to implement one or more modules, such as transit planning service module 520 configured to implement one or more aspects of the present disclosure.

It will be appreciated that the term "module" refers to computer logic utilized to provide desired functionality. Thus, a module can be implemented in hardware, application specific circuits, firmware and/or software controlling a general purpose processor. In one embodiment, the modules are program code files stored on the storage device, loaded into one or more memory devices and executed by one or more processors or can be provided from computer program products, for example computer executable instructions, that are stored in a tangible computer-readable storage medium such as RAM, hard disk or optical or magnetic media. When software is used, any suitable programming language or platform can be used to implement the module.

Memory 514 can also include data 518 that can be retrieved, manipulated, created, or stored by the one or more processors 512. The data 518 can include, for instance, transit data, line directions, and other data used by a transit planning service according to example aspects of the present disclosure. The data 518 can be stored in one or more databases. The one or more databases can be connected to the server 510 by a high bandwidth LAN or WAN, or can also be connected to server 510 through network 540. The one or more databases can be split up so that they are located in multiple locales.

The server 510 can exchange data with one or more client devices 530 over the network 540. Although two client devices 530 are illustrated in FIG. 7, any number of client devices 530 can be connected to the server 510 over the network 540. Each of the client devices 530 can be any suitable type of computing device, such as a general purpose computer, special purpose computer, laptop, desktop, mobile device, navigation system, smartphone, tablet, wearable computing device, a display with one or more processors, or other suitable computing device.

Similar to the server 510, a client device 530 can include one or more processor(s) 532 and a memory 534. The one or more processor(s) 532 can include one or more central processing units (CPUs), graphics processing units (GPUs) dedicated to efficiently rendering images or performing other specialized calculations, and/or other processing devices. The memory 534 can include one or more computer-readable media and can store information accessible by the one or more processors 532, including instructions 536 that can be executed by the one or more processors 532 and data 538. For instance, the memory 534 can store instructions 536 for implementing a user interface module for presenting transit times grouped by direction according to example aspects of the present disclosure, such as the example user interface 200 depicted in FIG. 2. The instructions 536 can also be used to implement a direction module configured to identify directions associated with a transit trip at the client device 530 according to example aspects of the present disclosure.

The client device 530 of FIG. 7 can include various input/output devices for providing and receiving information from a user, such as a touch screen, touch pad, data entry keys, speakers, and/or a microphone suitable for voice recognition. For instance, the client device 530 can have a display 535 for presenting a user interface of a transit planning service according to example aspects of the present disclosure.

The client device 530 can also include a network interface used to communicate with one or more remote computing devices (e.g. server 510) over the network 540. The network interface can include any suitable components for interfacing with one more networks, including for example, transmitters, receivers, ports, controllers, antennas, or other suitable components.

The network 540 can be any type of communications network, such as a local area network (e.g. intranet), wide area network (e.g. Internet), cellular network, or some combination thereof. The network 540 can also include a direct connection between a client device 530 and the server 510. In general, communication between the server 510 and a client device 530 can be carried via network interface using any type of wired and/or wireless connection, using a variety of communication protocols (e.g. TCP/IP, HTTP, SMTP, FTP), encodings or formats (e.g. HTML, XML), and/or protection schemes (e.g. VPN, secure HTTP, SSL).

The technology discussed herein makes reference to servers, databases, software applications, and other computer-based systems, as well as actions taken and information sent to and from such systems. One of ordinary skill in the art will recognize that the inherent flexibility of computer-based systems allows for a great variety of possible configurations, combinations, and divisions of tasks and functionality between and among components. For instance, server processes discussed herein may be implemented using a single server or multiple servers working in combination. Databases and applications may be implemented on a single system or distributed across multiple systems. Distributed components may operate sequentially or in parallel.

While the present subject matter has been described in detail with respect to specific example embodiments thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A computer-implemented method of determining a direction name associated with a transit trip along a transit line, the method comprising:
identifying, by the one or more computing devices, a plurality of transit stops along a transit line;
accessing, by the one or more computing devices, data indicative of an ordering for the plurality of transit stops along the transit line, the ordering ranking each of the plurality of transit stops based at least in part on a frequency of use of the transit stop in a transit network; and
identifying, by the one or more computing devices, a direction name associated with a transit trip along the transit line at a reference transit stop based at least in part the data indicative of the ordering for the plurality of transit stops along the transit line.

2. The computer-implemented method of claim 1, wherein the method further comprises providing for display, by the one or more computing devices, the direction name in conjunction with a transit time associated with the transit trip at the reference transit stop.

3. The computer-implemented method of claim 1 or 2, wherein the direction name is determined based at least in part on a station name associated with a transit stop identified based at least in part on the ordering of the plurality of transit stops.

4. The computer-implemented method of claim 2 or claim 3 as dependent on claim 2, wherein providing for display, by the one or more computing devices, the direction name in conjunction with a transit time associated with the transit trip at the reference transit stop comprises:
grouping, by the one or more computing devices, the transit time associated with the transit trip based at least in part the direction name; and
providing for display, by the one or more computing devices, a plurality of transit times grouped by the direction name.

5. The computer-implemented method of claim 2 or any one of claims 3 and 4 as dependent on claim 2, wherein providing for display, by the one or more computing devices, the direction name in conjunction with a plurality of transit times for the transit line at the reference transit stop comprises:
grouping, by the one or more computing devices, the transit time associated with the transit trip based at least in part transit name, direction name, and headsign; and
providing for display, by the one or more computing devices, a plurality of transit times grouped by transit line, direction name, and headsign.

6. The computer-implemented method of any one of the preceding claims, wherein the ordering for the plurality of transit stops is determined based at least in part on a number of departures at each of the plurality of transit stops over a time period.

7. The computer-implemented method of any one of the preceding claims, wherein the ordering for the plurality of transit stops is determined based at least in part on a number of arrivals at each of the plurality of transit stops a time period.

8. The computer-implemented method of any one of the preceding claims, wherein the ordering for the plurality of transit stops is determined based at least in part on a number of transfers associated with each of the plurality of transit stops.

9. The computer-implemented method of any one of the preceding claims, wherein the ordering is a weak ordering.

10. The computer-implemented method of any one of the preceding claims, wherein determining, by the one or more computing devices, a direction name associated with the transit line at the reference transit stop comprises:
identifying, by the one or more computing devices, a highest ranked transit stop in the ordering that is located downstream of the reference transit stop along the transit line; and
identifying, by the one or more computing devices, the station name of the highest ranked transit stop as the direction name.

11. The computer-implemented method of any one of the preceding claims, wherein the transit line is associated with a first transit trip and a second transit trip, the first transit trip being associated with at least one transit stop that is different from a plurality of transit stops associated with the second transit trip.

12. The computer-implemented method of claim 11, wherein determining, by the one or more computing devices, a direction name associated with the transit line at the reference transit stop comprises:
identifying, by the one or more computing devices, a highest ranked transit stop common to both the first transit trip and the second transit trip and located downstream of the reference transit stop along the transit line; and
identifying, by the one or more computing devices, a station name associated with the highest ranked transit stop common to both the first transit trip and the second transit trip as the direction name.

13. The computer-implemented method of any one of the preceding claims, wherein the transit time comprises a departure time.

14. A computer readable medium comprising computer executable instructions that when executed by a computer will cause the computer to carry out a method according to any one of the preceding claims.

15. A computing system, comprising:
a display device;
one or more processors; and
a computer readable medium according to claim 14.
